# EUROPEAN PATENT SPECIFICATION

(11) **EP 0 278 471 B1**
(45) Date of publication and mention of the grant of the patent: **17.01.1996**
(21) Application number: 88101851.9
(22) Date of filing: 09.02.1988
(51) Int. Cl.: G06F 3/06

(54) **Data processing method and system for accessing rotating storage means**
Datenverarbeitungsverfahren und -system zum Zugreifen auf rotierende Speichermittel
Méthode et système de traitement de données pour accéder à des moyens de mémoires rotatifs

(30) Priority: 13.02.1987 US 14902
(43) Date of publication of application: 17.08.1988
(73) Proprietor: International Business Machines Corporation, Armonk, N.Y. 10504 (US)
(72) Inventor: Barrett, Gerald George, Austin, Texas 78728 (US); Pasha, Syed Zahid, Austin, Texas 78727 (US); Shaheen-Gouda, Amal Ahmed, Austin, Texas 78759 (US)
(74) Representative: Moss, Robert Douglas

(56) References cited:
- EP-A- 0 080 875
- EP-A- 0 109 309
- EP-A- 0 203 601

## Description

This invention relates to the accessing of data from a mass memory storage device and specifically to the accessing of data from a rotating memory medium.

Most data processing systems require mass memory storage facilities that store large amounts of data. One such mass memory device is a hard file or hard disk. The hard file includes several surfaces that have a magnetic code for the magnetic storage of data. Data is stored and retrieved by the moving of a magnetic sensor or head over the surfaces. The surfaces are rotated at a high speed. Heads are located on top of each surface and are connected by an arm. Data is stored on the surfaces in concentric channels termed tracks. Each set of tracks on different surfaces but with the same radius is called a cylinder. Each track includes a series of sequentially located sectors that are addressable for the storage and retrieval of data. When the heads are located on top of tracks of a specific cylinder, the arm does not move for reading or writing data from or to sectors on that cylinder. When information is located on a different track, the head will have to be relocated over that track to read or write data into sectors of that track. The movement of this arm is termed a seek operation.

As the speed of the data processing systems increases, so does the demand for a greater access speed. In some cases the speed of the rotating surface and the speed of the head in locating tracks can limit performance of the overall data processing system. This problem occurs when the access commands from the data processing system are not received fast enough to permit adjacent sectors to be accessed on the hard file surface in the same revolution. In other words, the head will have to wait for a second revolution for the next sector in the sequence to be accessed. If sequential sectors are being accessed from a specific surface and the arm is required to change cylinders because of an additional data request on another cylinder, the time to reposition the head over the new cylinder track to read the successive data block (seek time) increases the access time for data retrieval. Also the access time is increased by the rotational delay. Once the head is on the required cylinder the data transfer cannot start until the required sector is under the head.

EP-A-0109309 discloses a computer system including a host system connected via storage control elements to a plurality of disk data storage devices. The storage control elements include a cache and associated cache manager which functions to determine whether and when data not specifically requested by the processor should be prestaged to cache. At the completion of a read operation, the cache manager makes this determination with reference to statistical information relating to operations which have already been completed.

It is an object of the present invention to provide an apparatus to decrease the access time for data from a rotating hard file.

According to the invention, there is provided a method of transferring data from a rotatable storage means to a requesting processor coupled to said storage means by storage control means including a storage buffer, said storage means having data stored thereon in sequentially located data sectors defined in data tracks, the method comprising the steps of: in response to read requests received from said processor, issuing read commands to transfer the data requested by said processor from the storage means to the storage buffer; determining, at said control means, when at least two read requests received from said processor are for data that are stored in sequentially located sectors of said storage means; providing one or more read-ahead commands to access, from said storage means, data that one stored in the next following sectors and one not requested by the processor, in response to a determination that sequentially located data are being requested by said at least two read requests.

Further according to the invention, there is provided a data processing system comprising a processor and a rotatable storage means on which data is storable in sequentially located data sectors defined in data tracks; and storage control means including a data buffer, coupling said processor to said storage means, for controlling the transfer of data between said storage means and said data buffer, said storage control means being responsive to read requests from the processor to provide read commands to transfer data requested by the processor from the storage means to the data buffer, and responsive to a determination that at least two of said read requests are for data that are stored in sequentially located sectors of said storage means to provide read-ahead commands to access, from said storage means, data that are stored in the next following sectors and are not requested by said processor.

In the preferred embodiment of the invention to be described in detail later, a data processing system is disclosed that includes at least one storage device for storing and retrieving data from a plurality of rotating tracks. Each surface contains a set of tracks and each track includes sequentially located sectors of storage data. A storage interface is connected to the storage device to control the storing and retrieving of data from this device. The interface includes a data buffer and a command buffer. The command buffer is divided into sets of command elements and each set of command elements is dedicated to one of the storage devices connected. A set of command elements is also dedicated to reading the data buffer. A storage driver is provided connected to the interface. The storage driver receives storage device access commands from a processor. The driver services a plurality of command queues each one dedicated to a storage device and its respective set of command element buffers in the interface. The driver further includes the capability to provide commands for data that has not been requested by a processor for storage in the interface data buffer.

In this driver, the commands for data not requested by the processor are generated in response to commands from the processor. The driver further includes the capability to examine the commands in the command queues for each of the storage devices to determine if sequential sectors are being requested. In response to the request for sequential sectors, a series of commands for adjacent sectors not requested by the processor are made. These sectors that have not been requested are then stored in the interface data buffer. when the driver receives a read command in the command queue, it can determine if the requested data is in the buffer. This data is then retrieved from the data buffer without accessing the storage device.

The preferred embodiment will now be described, by way of example, with reference to the accompanying drawings in which:
Figure 1 is a block diagram of a data processing system;
Figure 2 is a block diagram of a storage device driver connected to an interface and storage devices;
Figures 3A and 3B are flow charts illustrating the storage device driver procedures for responding to storage device commands;
Figure 4 is a flow chart illustrating the storage device driver procedures for responding to a command complete interrupt from the storage interface; and
Figure 5 is a flow chart illustrating the procedure performed by the storage device driver when serving two or more storage devices.

When data is accessed from a hard file in a data processing system, a read request is usually queued by the system software. The hard file device driver then dequeues this command and sends it to a hard file interface. If the data to be read is sequential, i.e., requesting a series of data sectors located adjacently on a single track, it is important to issue these new read requests to the interface circuit or adapter fast enough so that the disk head does not have to wait for a second revolution to read the next located data block.

The present system provides three mechanisms to achieve a lower access time for a rotating hard file. The first is a software device driver that detects sequential read patterns from a set of read commands and issues "read ahead" commands. The second is the data buffer on an adapter card (for Hard File Device Interface). This buffer is divided into "cache blocks" that hold data provided in response to the Input/Output commands including the read ahead commands. The third feature is that the commands are actually queued in command element buffers on the adapter.

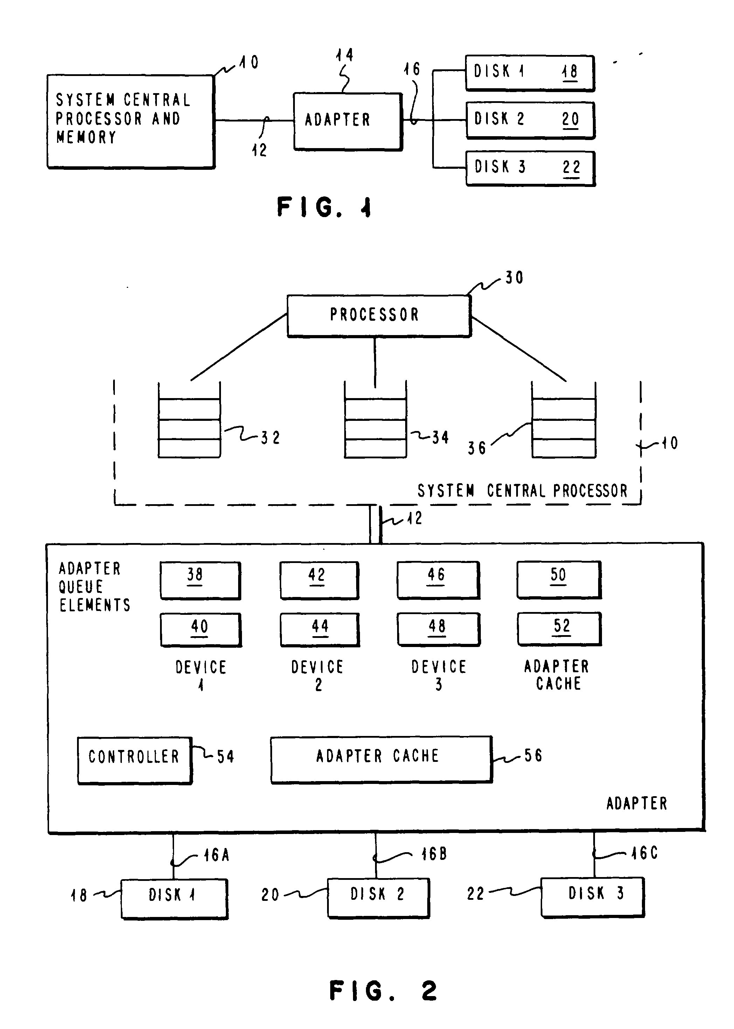

Figure 1 is a block diagram of the overall system for the present invention. In Fig. 1 a system central processor 10 is connected by a bus 12 to an adapter 14. This adapter is a hard file interface device that is connected by bus 16 to three rotating hard file disk devices 18, 20 and 22.

Figure 2 illustrates elements of the system processor 10 and the adapter 14. Storage device driver software is executed in the CPU processor 30 to support application software tasks also being executed in the CPU processor 30. The storage device driver software receives commands from three command queues 32, 34 and 36. Each command queue 32, 34 and 36 corresponds respectively to one of the disk devices 18, 20 and 22. The storage device driver software in CPU processor 30 communicates with the adapter 14 by the bus 12. The adapter 14 includes a command buffer having queue elements 38, 40, 42, 44, 46 and 48. The adapter queue elements 38 and 40 are dedicated to disk 1, 18. Likewise, queue

elements 42 and 44 are dedicated to disk 2, 20 and elements 46 and 48 are dedicated to disk 3, 22. The adapter 14 further includes an adapter cache 56. In the preferred embodiment this cache includes 16 kbytes of RAM divided into 32 blocks of 512 bytes each. Each block corresponds to data that is retrieved from one of the disks 18, 20 or 22.

Each queue element such as 38 or 40 stores a single command from the storage device driver executing in CPU processor 30. The adapter 14 further includes a controller 54 that provides the adapter processing capability to interface to both the disk 18, 20 and 22 and the system central processor 10.

The system device driver issues one of four commands to the adapter 14. These include write, read, read ahead, and read cache. The write command is a request that data from the system central processor 10 memory (contained internally) be written to the designated disk. The read command requests that data be retrieved from the disk and provided to the system central processor 10 memory. The read ahead command is generated by the storage device driver software in response to read commands issued by applications software in the CPU processor 30. The read ahead command requests data to be read from the disk to one of the adapter cache blocks in the adapter cache 56. The read cache command is generated by the storage device driver in response to a read command when the storage device driver has determined that the data that is being requested by the read command is in fact stored in the adapter cache 56. Therefore, this data in the adapter cache can be provided without accessing any of the disks.

It should be emphasised that read ahead commands do not require any extra disk seek (movement of the head) or rotation time. They are issued for the disk sectors that are following the sectors actually requested by read commands that have been stored in the command queues 32, 34, 36. The number of read ahead commands issued in response to read commands in the command queues 32, 34, 36 is dependent upon whether the system storage driver determines that such a command is part of a sequential access and a determination as to the number of disks that are currently in use. Therefore, the actual cost of executing a read command at the adapter is extremely small. The benefit of providing read ahead commands is that data that is likely to be requested will be available at the adapter cache 56 and that the disk will not have to be accessed. This saves disk seek and rotation time.

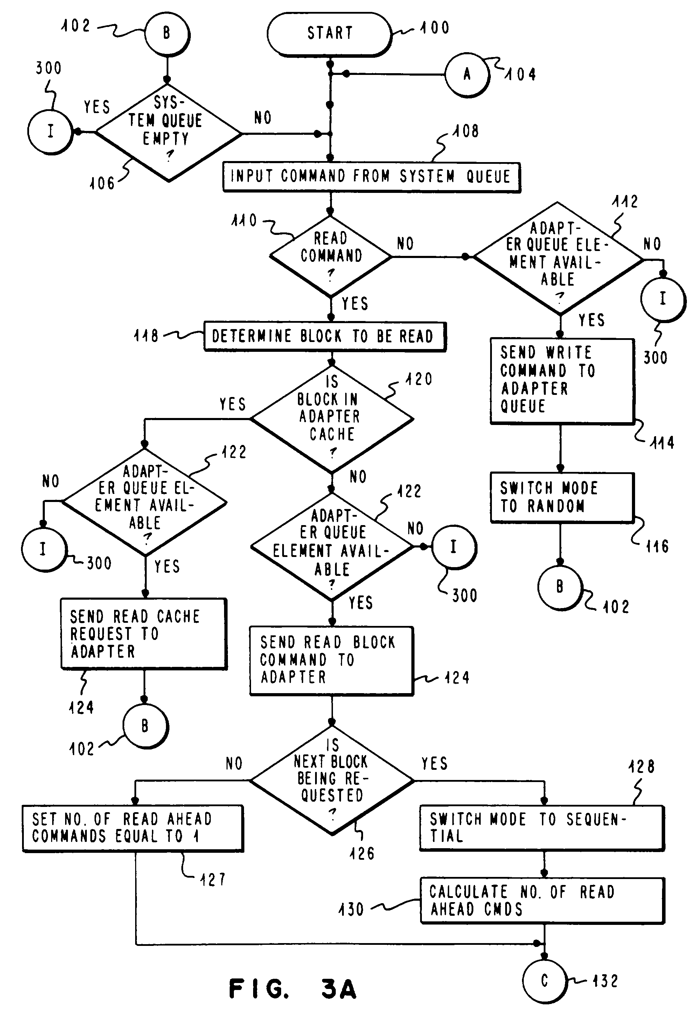

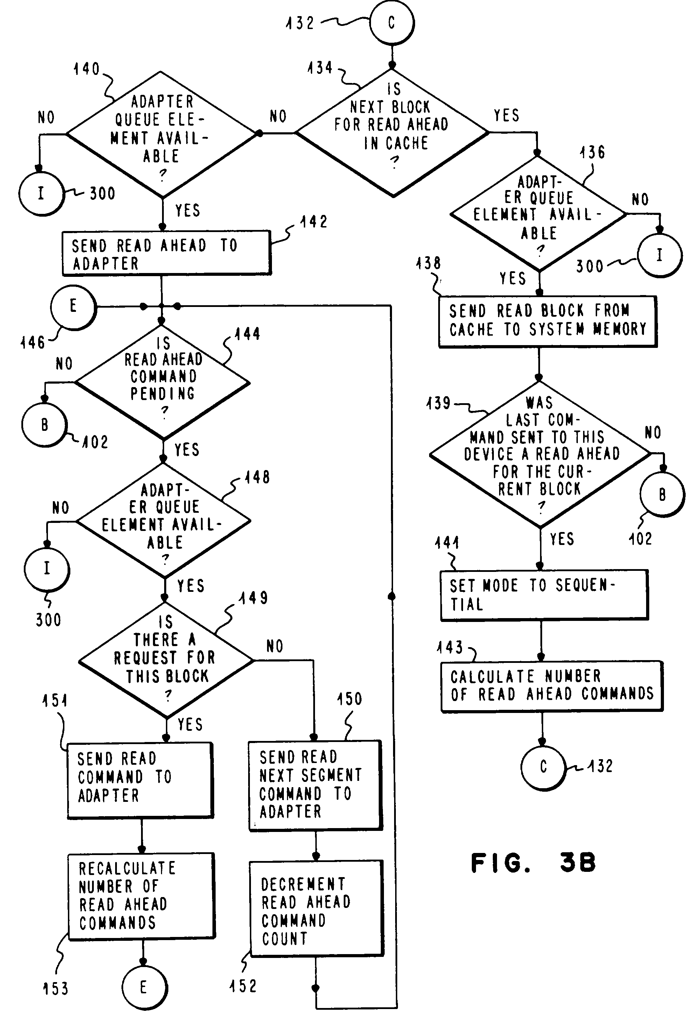

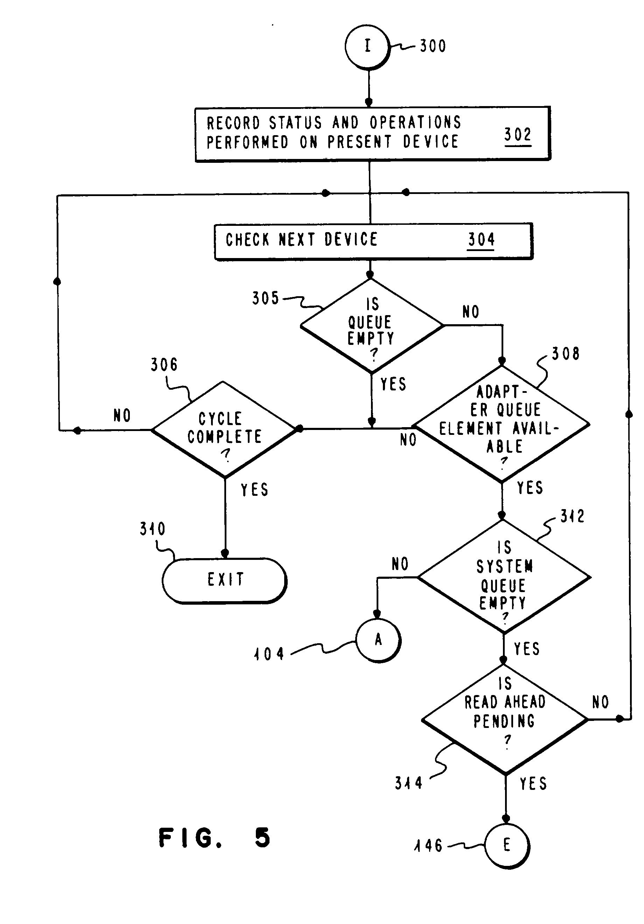

The storage device driver software is illustrated in flow chart form in Figs. 3A, 3B, 4 and 5. Figures 3A and 3B list the flow chart for the software that provides the commands to the adapter 14. The flow charts in Figs. 3A and 3B are executed for each disk device independently. Referring to Fig. 3A, the storage device driver starts in location 100 proceeds to step 108 to input a command from one of the system queues 32, 34 or 36. The driver then proceeds to step 110 to determine if it is a read command. If not, the driver proceeds to step 112 knowing that this command is a write command and determines in step 112 if an adapter queue element is available. If not, the driver proceeds to step 300 which executes the software illustrated in Fig. 5. However, if a queue element is available, the driver proceeds to step 114 to send a write command to the adapter queue for storage in the available queue element. The driver then switches the mode to random to indicate that only a single read ahead should be performed on the next read cycle. The driver then proceeds to connector 102 to step 106 to determine if the system queue is empty. If so, the driver exits to the software in Fig. 5 (connector 300). If not, the driver proceeds again to step 108.

Returning to step 110, if the command is a read, the driver proceeds to step 118 to determine which block is to be read. Then in step 120 the driver decides whether or not the block is in the adapter cache. If so the driver proceeds to step 122 to determine if the adapter queue element for the cache is available. If not, the driver proceeds through connector 300 to the software in Fig. 5. If a cache queue element is available, the driver proceeds to step 124 to send the read cache command to the adapter cache queue element and returns via connector 102 to step 106. Returning to step 120, if the block is not in the adapter cache, the driver proceeds to step 122 to determine if an adapter queue element is available for that device. If not, the driver proceeds through connector 300 to the software in Fig. 5. If so, the driver proceeds to step 124 to send a read block command to the adapter queue elements for that device. The driver then proceeds to step 126 to determine if the next read request in the queue is for the following block. If not, the driver proceeds to step 127 to set the number of read ahead commands to one and then proceeds to connector 132 to the software in Fig. 3B. If it is, the driver proceeds to step 128 to switch the mode to sequential. Then, in step 130, the driver calculates the number of read ahead commands and sends these commands to the adapter. In the preferred embodiment, the number of read ahead commands for sequential mode is determined in accordance with the number of disk devices in use. If only one device is in use, then six read ahead commands are issued. If two devices are in use, then five read ahead commands are issued. If three devices are in use, four read ahead commands are issued.

The driver then proceeds to connector 132 and to step 134 (Fig. 3B). In step 134, the driver determines if the next block is in the cache. If so, the driver proceeds to step 136 to determine if an adapter queue element for the cache is available. If so, then the adapter sends a read command from the adapter in step 138 and proceeds to step 139 to determine if the last command sent was a read ahead for the current block. If not, the driver exits through connector 102 back to step 106 (Fig. 3A). If so; the driver proceeds to step 141 to set the mode to sequential, to step 143 to calculate the number of read ahead commands and to connector 132 to step 134. Returning to step 136 if an adapter queue element for the cache is not available, the driver proceeds through connector 300 to the software in Fig. 5.

Returning to step 134, if the data does not exist in the adapter cache, the driver proceeds to step 140 to determine if an adapter queue element is available. If not, the driver proceeds through connector 300 to the software in Fig. 5 and if so, the driver proceeds to step 142 to send a read command for the next block to the adapter. The driver proceeds to step 144 to determine if there is a read ahead command pending. If not, the driver proceeds through connector 102 back to step 106 (Fig. 3A). If so, the driver proceeds to step 148 to determine if an adapter queue element is available for this read ahead command. If no adapter queue element is available, the driver proceeds to connector 300 to the software in Fig. 5. If an adapter queue element is available, the driver proceeds to step 149 to determine if there is a pending request for the block requested by the read ahead command. If so, the driver proceeds to step 151 to send a read command to the adapter, then to step 153 to recalculate the number of read ahead commands and then to connector 146. Returning to step 149, if there is no request for this block the driver proceeds to step 150 to send a read ahead command to the adapter and then to step 152 to decrement the read ahead command count. The driver then returns to step 144 to service the remaining read ahead commands.

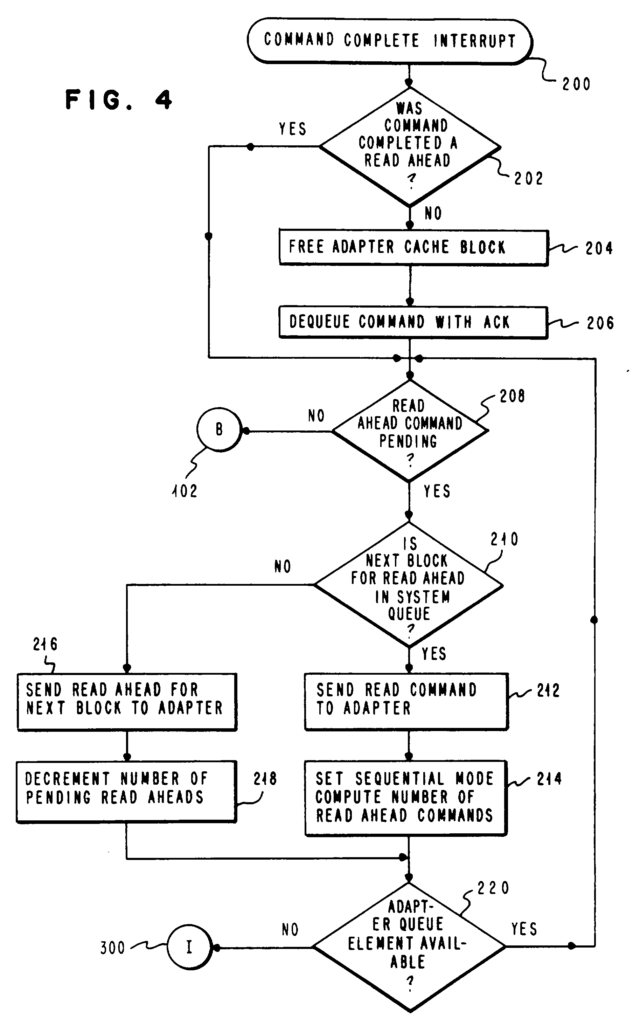

Figure 4 illustrates the operation of the driver software upon the occurrence of a command interrupt from the adapter 14. When the adapter 14 has completed a read, write, read ahead, or read cache command, the driver is notified by a command complete interrupt. While the driver is executing the software in Figs. 3A, 3B and 5, a command complete interrupt will interrupt the operation of this software. Referring to Fig. 4, the command complete interrupt will cause the driver to start at point 200 and proceed to step 202 in order to determine if the command that was completed was a read ahead command. If so, the driver proceeds to step 208. If not, then the driver frees an adapter cache block in step 204 and dequeues the command from the device queue with an acknowledge (ACK). The driver proceeds to step 208 to determine if a read ahead command is then pending. If not, the driver proceeds through connector 102 to step 106 (Fig. 3A). If a read ahead command is pending, the driver proceeds to step 210 to determine if the next block for the read ahead is included in one of the read commands in the command queues (queues 32, 34 or 36). If so, the driver proceeds to step 212 to send a read command for the requested block to the adapter and in step 214 sets the sequential mode in order to compute the number of read ahead commands as previously discussed. Returning to step 210, if the next block is not in the system queue, the driver proceeds to step 216 to send a read ahead command for the next segment to the adapter and decrements the number of pending read ahead commands in step 218. The device driver exiting either step 218 or step 214 proceeds to step 220 to determine if an adapter queue is available. If so, the driver returns to step 208. If not, the driver proceeds to the software in Fig. 5 through connector 300.

In Fig. 5, the procedure illustrated serves as a system bookkeeper for all the storage devices being services. In step 302 the driver records the status and operations performed on the current storage device. It is important to note when no operations are performed on a storage device. This fact is used not only in the computation of the number of read aheads but also for determining when all devices have been sufficiently serviced. The driver then proceeds to check the next device in step 304. The driver then determines if the command queue is empty in step 305. If so, the driver proceeds to step 306. If not, the driver proceeds to step 308. In step 308, the driver determines whether or not an adapter queue element is available for that device, if so, the driver proceeds to step 312 to determine if the system queue for that device is empty. If not, the driver proceeds through connector 104 to step 108 (Fig. 3A). If the system queue element for that storage device is empty, the device driver proceeds to step 314 to determine if any read aheads are pending for that device. If read ahead commands are pending, the driver then proceeds through connector 146 to step 144 (Fig. 3B). If no read aheads are pending the driver returns to step 304. In step 308, if an adapter queue element is not available for that device, the driver proceeds to step 306 to determine if all of the devices have been adequately serviced. In other words, has the driver accessed the storage devices without having to perform any function. If so, the device driver exits in step 310. If not, the device driver returns to step 304.

## Claims

1. A method of transferring data from a rotatable storage means to a requesting processor coupled to said storage means by storage control means including a storage buffer, said storage means having data stored thereon in sequentially located data sectors defined in data tracks, the method comprising the steps of:
in response to read requests received from said processor, issuing read commands to transfer the data requested by said processor from the storage means to the storage buffer;
determining, at said control means, when at least two read requests received from said processor are for data that are stored in sequentially located sectors of said storage means;
providing one or more read-ahead commands to access, from said storage means, data that are stored in the next following sectors and are not requested by the processor, in response to a determination that sequentially located data are being requested by said at least two read requests.

2. A data processing system comprising a processor (30) and a rotatable storage means (18) on which data is storable in sequentially located data sectors defined in data tracks; and
storage control means including a data buffer (56), coupling said processor to said storage means, for controlling the transfer of data between said storage means and said data buffer, said storage control means being responsive to read requests from the processor to provide read commands to transfer data requested by the processor from the storage means to the data buffer, and responsive to a determination that at least two of said read requests are for data that are stored in sequentially located sectors of said storage means to provide read-ahead commands to access, from said storage means, data that are stored in the next following sectors and are not requested by said processor.

3. A data processing system as claimed in claim 2, said storage control means comprising storage driver means associated with the processor and a storage adapter incorporating said data buffer, said storage driver means being responsive to said processor read requests to issue said read commands and read-ahead commands to said storage adapter over a connecting data bus (12).

4. A data processing system as claimed in claim 3 comprising a plurality of data storage means connected for communication with the system adapter, wherein the storage adapter further includes a plurality of command buffers each for storing access commands for a respective one of said plurality of storage means and for said data buffer.

5. A data processing system as claimed in any of claims 2 to claim 4, wherein the storage driver means includes means for determining when access requests from said processor include requests for data stored in the data buffer and in response thereto for providing a read-buffer command to retrieve the requested data from the data buffer.

## Patentansprüche

1. Ein Verfahren zur Übertragung von Daten aus einem rotierenden Speichermittel an einen anfordernden Prozessor, der durch ein Speichersteuerungsmittel mit einem Datenpuffer an das Speichermittel angeschlossen ist, wobei die Daten auf dem Speichermittel in durch Datenspuren definierten aufeinanderfolgenden Datensektoren gespeichert sind und das Verfahren folgende Schritte umfaßt:
als Antwort auf Leseanforderungen vom Prozessor Erteilung von Lesebefehlen zur Übertragung der vom Prozessor angeforderten Daten aus dem Speichermittel an den Speicherpuffer;
Feststellung durch das Steuerungsmittel, wann mindestens zwei Leseanforderungen vom Prozessor Daten betreffen, die in aufeinanderfolgenden Sektoren des Speichermittels gespeichert sind;
Erteilung eines oder mehrerer Vorauslesebefehle, um vom Speichermittel aus auf Daten zuzugreifen, die im nächsten Sektor gespeichert sind und nicht vom Prozessor angefordert wurden, als Antwort auf die Feststellung, daß Daten an aufeinanderfolgenden Positionen von diesen mindestens zwei Leseanforderungen betroffen sind.

2. Ein Datenverarbeitungssystem mit einem Prozessor 30 und einem rotierenden Speichermittel 18, auf dem Daten in durch Datenspuren definierten aufeinanderfolgenden Datensektoren gespeichert sind, und
mit einem Speichersteuerungsmittel mit einem Datenpuffer 56, der den Prozessor mit dem Speichermittel koppelt, zur Steuerung der Datenübertragung zwischen dem Speichermittel und dem Datenpuffer, wobei das Speichersteuerungsmittel auf Leseanforderungen vom Prozessor reagiert, indem es Lesebefehle zur Übertragung der vom Prozessor angeforderten Daten vom Speichermittel an den Datenpuffer erteilt, und auf die Feststellung, daß mindestens zwei der Leseanforderungn in aufeinanderfolgenden Sektoren des Speichermittels gespeicherte Daten betreffen, reagiert, indem es Vorauslesebefehle erteilt, um vom Speicherungsmittel Daten abzurufen, die im nächsten Sektor gespeichert sind und nicht vom Prozessor angefordert wurden.

3. Ein Datenverarbeitungssystem gemäß Anspruch 2, bei dem das Speichersteuerungsmittel einen dem Prozessor zugeordneten Speichertreiber und einen Speicheradapter mit dem Datenpuffer enthält, wobei das Speichersteuerungsmittel auf Leseanforderungen vom Prozessor reagiert, indem es die Lesebefehle und die Vorauslesebefehle über einen verbindenden Datenbus 12 an den Speicheradapter sendet.

4. Ein Datenverarbeitungssystem gemäß Anspruch 3 mit mehreren Datenspeichermitteln, die so angeschlossen sind, daß sie mit dem Systemadapter Daten austauschen, wobei der Speicheradapter außerdem mehrere Befehlspuffer enthält, in denen jeweils Zugriffsbefehle für eines der Speichermittel und für den Datenpuffer gespeichert sind.

5. Ein Datenverarbeitungssystem gemäß Anspruch 2 bis 4, bei dem der Speichertreiber ein Mittel enthält, um festzustellen, wann Zugriffsanforderungen vom Prozessor Anforderungen der im Datenpuffer gespeicherten Daten enthalten, und daraufhin einen Pufferlesebefehl zu erteilen, der die angeforderten Daten aus dem Datenpuffer ausliest.

## Revendications

1. Procédé pour transférer des données entre un dispositif de mémorisation rotatif et un processeur demandeur couplé au dit dispositif de mémorisation par un contrôleur de mémorisation comprenant une mémoire-tampon de mémorisation, des données étant mémorisées dans ledit dispositif de mémorisation sur des secteurs de données positionnées séquentiellement, définis comme des pistes de données, ledit procédé comprenant les étapes consistant à :
en réponse à des demandes de lecture reçues en provenance du dit processeur, délivrer des commandes de lecture pour transférer les données demandées par ledit processeur entre le dispositif de mémorisation et la mémoire-tampon de mémorisation;
déterminer, au niveau du dit contrôleur de mémorisation, si au moins deux demandes de lecture reçues en provenance du dit processeur concernent des données qui sont mémorisées dans des secteurs positionnés séquentiellement du dit dispositif de mémorisation;
délivrer une ou plusieurs commandes de lecture anticipée pour accéder, depuis ledit dispositif de mémorisation, aux données qui sont mémorisées dans les secteurs immédiatement suivants et ne sont pas demandées par le processeur, en réponse à la détermination que des données positionnées séquentiellement sont l'objet d'au moins deux demandes de lecture.

2. Système de traitement de l'information comprenant un processeur (30) et un dispositif de mémorisation rotatif (18) sur lequel des données sont mémorisables dans des secteurs de données positionnés séquentiellement définis comme des pistes de données; et
un contrôleur de mémorisation comprenant une mémoire-tampon de données (56), connectant ledit processeur au dit dispositif de mémorisation, pour contrôler le transfert de données entre ledit dispositif de mémorisation et ladite mémoire-tampon de données, ledit contrôleur de mémorisation étant sensible aux dites demandes de lecture en provenance du processeur pour délivrer des commandes de lecture pour transférer des données demandées par le processeur entre le dispositif de mémorisation et la mémoire-tampon de données, et étant sensible à la détermination qu'au moins deux des dites demandes de lecture concernent des données qui sont mémorisées dans des secteurs positionnés séquentiellement du dit dispositif de mémorisation pour délivrer des commande de lecture anticipée pour accéder, depuis ledit dispositif de mémorisation, aux données qui sont mémorisées dans les secteurs immédiatement suivants et qui ne sont pas demandées par ledit processeur.

3. Système de traitement de l'information selon la revendication 2, dans lequel ledit contrôleur de mémorisation est constitué d'un circuit d'attaque de mémorisation associé au dit processeur et d'un adaptateur de mémorisation incorporant ladite mémoire-tampon de données, ledit circuit d'attaque de mémorisation étant sensible aux dites demandes de lecture du processeur pour transmettre les dites commandes de lecture et les dites commandes de lecture anticipée au dit adaptateur de mémorisation via un bus de données de connexion (12).

4. Système de traitement de l'information selon la revendication 3 comprenant une pluralité de mémoires connectées pour communiquer avec l'adaptateur système, où l'adaptateur de mémorisation comprend, de plus, une pluralité de tampons de commandes pour mémoriser chacun des commandes d'accès concernant l'un des dispositifs de ladite pluralité de dispositifs de mémorisation et ladite mémoire-tampon de données.

5. Système de traitement de l'information selon l'une quelconque des revendications 2 à 4, où le circuit d'attaque de mémorisation comprend un élément pour déterminer si des demandes d'accès en provenance du dit processeur incluent des demandes concernant des données mémorisées dans la mémoire-tampon de données et, en réponse à celles-ci, pour délivrer une commande lire-tampon pour extraire les données demandées de la mémoire-tampon de données.
